# FASCICULE DE BREVET EUROPEEN

(11) **EP 0 844 708 B1**
(45) Date de publication et mention de la délivrance du brevet: **04.08.2004**
(21) Numéro de dépôt: 97402678.3
(22) Date de dépôt: 07.11.1997
(51) Int. Cl.: H02B 1/28

(54) **Ensemble d'enveloppes destiné à loger des appareillages électriques et procédé d'aboutement d'un tel ensemble d'enveloppes**
Aufbau von Schränken zur Aufnahme von elektrischen Geräten und Verfahren zum Montieren von solchen Schränken
Assembly of cabinets for electrical equipement and method of assembling such cabinets

(30) Priorité: 21.11.1996 FR 9614355
(43) Date de publication de la demande: 27.05.1998
(73) Titulaire: Schneider Electric Industries SAS, 92500 Rueil-Malmaison (FR)
(72) Inventeur: Ritter, Michel, Ing., 57045 Arzviller (FR); Kaczmarek, Stéphane, Ing., 67260 Sarre-Unio (FR); Tabourin, Daniel, Ing., 69890 La Tour De Salvagny (FR)

(56) Documents cités:
- EP-A- 0 533 557
- CH-A- 497 107
- FR-A- 998 031
- US-A- 3 791 681
- US-A- 5 072 952

## Description

La présente invention concerne un ensemble d'enveloppes avec un dispositif d'étanchéité destiné à loger des appareillages électriques et constitué par aboutement d'une première enveloppe et d'une deuxième enveloppe, lesquelles enveloppes comprennent chacune un cadre muni d'éléments profilés et sont aboutées au moyen d'un joint souple d'étanchéité qui présente une face de pose et une face opposée d'application appliquées respectivement contre des zones d'aboutement respectives des éléments profilés des deux enveloppes.

Des joints souples d'étanchéité connus pour ce type d'application comportent une armature relativement rigide et ont une forme spécifique pour être adaptés à la forme profilée généralement non uniforme des zones d'aboutement d'enveloppes.

Ces joints sont coûteux. De plus, en raison de la forme rectangulaire de la zone d'aboutement et de la rigidité du joint d'étanchéité connu, il est nécessaire d'effectuer une découpe partielle dans l'épaisseur du joint au niveau des angles du rectangle de la zone d'aboutement, ce qui entraîne une perte de temps lors de l'assemblage de deux enveloppes. Par ailleurs, le document US A 5072952 décrit un élément d'étanchéité comportant une enveloppe en grande partie hermétique entourant une mousse expansible. Néanmoins, cette enveloppe empêche la mousse de s'expanser librement autour des zones d'aboutement des enveloppes. D'autre part, il est déjà connu, notamment du document FR 998031A, un ensemble d'enveloppes électriques dont les profilés constituant les encadrements compriment un joint souple d'étanchéité non expansible lors de la juxtaposition d'enveloppes adjacentes.

L'invention a donc pour but de faciliter l'assemblage étanche des deux enveloppes de l'ensemble grâce à un joint peu coûteux, facile à poser et, excluant l'opération de découpe.

Pour cela, l'invention décrit un ensemble d'enveloppes avec un dispositif d'étanchéité, l'ensemble d'enveloppes étant destiné à loger des appareillages électriques et étant constitué par aboutement d'une première enveloppe et d'une deuxième enveloppe, lesquelles enveloppes comprennent chacune un cadre muni d'éléments profilés, le dispositif d'étanchéité comportant un joint souple d'étanchéité qui présente une face de pose et une face opposée d'application appliquées respectivement contre des zones d'aboutement respectives des éléments profilés des deux enveloppes, formées chacune par une arête pliée.

Selon l'invention, le joint est en mousse cellulaire expansible, à l'état précomprimé avant application de sa face de pose sur la zone d'aboutement de la première enveloppe, et est apte à s'expanser et à épouser les formes profilées des zones d'aboutement après application de sa face de pose. Selon une caractéristique, la face de pose du joint présente dans sa partie centrale une zone de fixation collée contre une arête de la première enveloppe, la partie restante de la face de pose ainsi que la face d'application étant appliquées de part et d'autre des arêtes respectives après expansion du joint dans la position d'assemblage des deux enveloppes.

L'invention décrit également un procédé d'aboutement d'un ensemble d'enveloppes destiné à loger des appareillages électriaues, le procédé d'aboutement étant réalisé à l'aide d'un tel dispositif d'étanchéité.

La description faite ci-après fera ressortir d'autres caractéristiques et avantages de l'invention, en regard des dessins annexés:
- la figure 1 montre un dispositif d'étanchéité selon l'invention associé à un châssis d'enveloppe qui est destiné à être assemblé avec un autre châssis d'enveloppe;
- la figure 2 montre une vue du dispositif d'étanchéité avant son association aux deux enveloppes;
- la figure 3 est une vue en coupe du dispositif associé à une enveloppe;
- la figure 4 est une vue en coupe du dispositif associé aux deux enveloppes aboutées;
- la figure 5 est une autre vue en coupe du dispositif associé aux deux enveloppes.

Le dispositif d'étanchéité 10 illustré sur les figures est associable à deux enveloppes 20 et 30 qui logent des appareillages électriques et sont destinées à être aboutées et assemblées l'une à l'autre. Le dispositif 10 permet de réaliser l'étanchéité des enveloppes avec l'extérieur au niveau de leur zone d'aboutement.

Le dispositif d'étanchéité 10 est constitué d'un joint précomprimé, souple en matière synthétique de type polymère qui se présente de préférence sous la forme d'une mousse à cellules ouvertes. Le conditionnement du joint permet de le garder précomprimé tant qu'il n'est pas utilisé et appliqué contre un support. Le joint 10 est apte à s'expanser une fois fixé sur la zone à étanchéifier, qui correspond ci-après à la zone d'aboutement des deux enveloppes. En variante, la mousse peut être à cellules fermées.

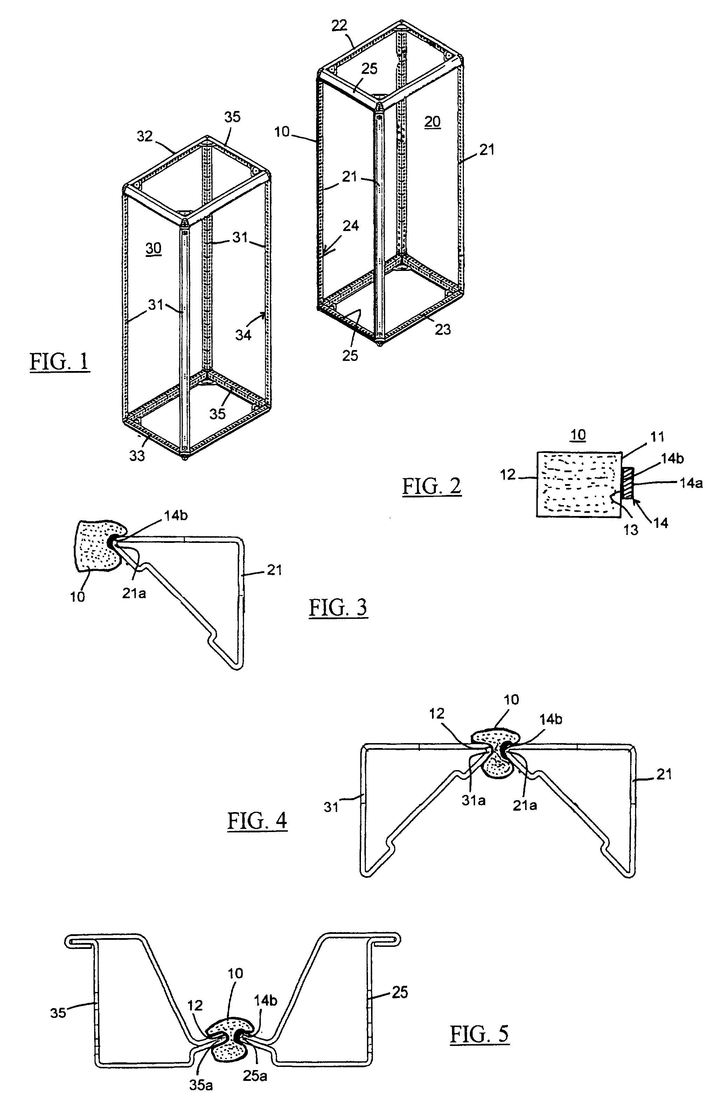

Le joint, illustré à la figure 2, présente une section carrée ou rectangulaire à l'état précomprimé. Il comporte une face de pose 11 destinée à être fixée par collage sur une zone d'aboutement de la première enveloppe 20 et une face opposée d'application 12 contre une zone d'aboutement correspondante de la seconde enveloppe 30.

La zone de fixation 13 de la face de pose 11 est réalisée sur toute la longueur du joint et est limitée à la partie centrale de la face 11.

De manière avantageuse, les moyens de collage de la zone de fixation 13 consistent en une bande adhésive double face 14 qui comporte une face 14a collée à la zone de fixation 13 et une face 14b destinée à se coller contre l'enveloppe 20.

Les enveloppes 20 et 30 sont de forme parallélépipédique et comportent chacune un châssis rigide métallique à montants verticaux 21, respectivement 31, reliés par des cadres horizontaux supérieur 22 et inférieur 23, respectivement 32 et 33. Les montants et les cadres horizontaux définissent ainsi des cadres verticaux.

Des cadres verticaux latéraux 24 et 34 des enveloppes respectives 20 et 30 sont destinés à être aboutés l'un à l'autre et assemblés par des moyens de fixation coopérant avec les montants 21, 31 et les traverses 25, 35 en vis à vis des cadres inférieurs et supérieurs respectifs 22, 23 et 32, 33.

Les montants 21, 31 (figures 3 et 4) et les traverses 25, 35 (figure 5) présentent des sections profilées différentes; la section profilée des cadres verticaux 24 et 34 est par conséquent non uniforme.

Afin d'assurer l'étanchéité entre les enveloppes 20 et 30, le joint 10 est applicable contre les cadres verticaux 24 et 34, et plus particulièrement contre les arêtes d'aboutement 21a, 31a des montants 21, 31 (figures 3 et 4) et les arêtes d'aboutement 25a, 35a des traverses 25 et 35 (figure 5).

L'association du joint aux enveloppes se fait de la manière suivante.

Le joint précomprimé 10 est fixé sur le cadre vertical 24 du châssis de l'enveloppe 20 en appliquant la face adhésive 14b de la zone de fixation 13 contre les arêtes d'aboutement 21a et 25a. Son expansion débute dès sa pose sur le cadre 24 (figure 3).

En raison de la souplesse du joint, celui-ci s'applique correctement sur les angles du cadre 24 en épousant leur forme sans nécessiter de découpes.

Par ailleurs, comme la zone de fixation 13 du joint ne s'étend pas sur l'ensemble de la face 11, la partie non adhésive peut ainsi s'expanser correctement et s'appliquer de part et d'autre des arêtes d'aboutement pour épouser la forme spécifique des deux sections profilées différentes du cadre.

Le cadre 34 de l'enveloppe 30 est ensuite appliqué contre la face d'application 12 du joint 10 par les arêtes d'aboutement 31a et 35a. Les enveloppes sont enfin fixées l'une à l'autre par des moyens de liaison et de fixation.

En raison de son expansion relativement lente, ce qui laisse suffisamment de temps pour assembler les deux enveloppes, le joint continue de s'expanser après la fixation des enveloppes et épouse ainsi parfaitement la forme des sections profilées des cadres 24 et 34 en enveloppant les arêtes d'aboutement des deux enveloppes. Le joint présente après son expansion une section droite en I.

## Revendications

1. Ensemble d'enveloppes avec un dispositif d'étanchéité, l'ensemble d'enveloppes étant destiné à loger des appareillages électriques et étant constitué par aboutement d'une première enveloppe (20) et d'une deuxième enveloppe (30), lesquelles enveloppes comprennent chacune un cadre muni d'éléments profilés (21, 25; 31, 35), le dispositif d'étanchéité comportant un joint souple d'étanchéité (10) qui présente une face de pose (11) et une face opposée d'application (12) appliquées respectivement contre des zones d'aboutement (21a, 25a, 31a, 35a) respectives des éléments profilés des deux enveloppes (20, 30), formées chacune par une arête pliée, **caractérisé en ce que** le joint (10) est en mousse cellulaire expansible, à l'état précomprimé avant application de sa face de pose (11) sur la zone d'aboutement (21a, 25a) de la première enveloppe, et est apte à s'expanser et à épouser les formes profilées des zones d'aboutement (21 a, 25a, 31 a, 35a) après application de sa face de pose (11), et **en ce que** la face de pose (11) du joint présente dans sa partie centrale une zone de fixation (13) collée contre une arête d'aboutement (21a, 25a) de la première enveloppe, la partie restante de la face de pose (11) ainsi que la face d'application (12) étant appliquées de part et d'autre des arêtes d'aboutement respectives (21a, 25a; 31a, 35a) après expansion du joint dans la position d'assemblage des deux enveloppes (20, 30).

2. Ensemble d'enveloppes selon la revendication 1, **caractérisé en ce que** le joint (10) a, avant expansion, une section droite carrée.

3. Ensemble d'enveloppes selon la revendication 1, **caractérisé en ce que** le joint (10) a, après expansion, une section droite en I.

4. Ensemble d'enveloppes selon la revendication 1, **caractérisé en ce que** la zone de fixation (13) consiste en une bande adhésive double face (14).

5. Procédé d'aboutement d'un ensemble d'enveloppes destiné à loger des appareillages électriques et constitué par aboutement d'une première enveloppe (20) et d'une deuxième enveloppe (30), lesquelles enveloppes comprennent chacune un cadre (24, 34) muni de zones d'aboutement (21a, 25a; 31a, 35a), le procédé d'aboutement étant réalisé à l'aide d'un dispositif d'étanchéité comportant un joint souple d'étanchéité (10) en mousse cellulaire expansible, à l'état précomiarimé avant application et qui présente une face de pose (11) comportant dans sa partie centrale une zone de fixation (13), et une face opposée d'application (12), **caractérisé par le fait que** :
- la zone de fixation (13) de la face de pose (11) du joint (10) est collée contre les zones d'aboutement (21a, 25a) de la première enveloppe (20),
- les zones d'aboutement (31a, 35a) de la deuxième enveloppe (30) sont appliquées contre la face d'application (12) du joint (10),
- les enveloppes (20, 30) sont fixées l'une à l'autre,
- le joint (10) continue de s'expanser après fixation de sorte que la partie restante de la face de pose (11) ainsi que la face d'application (12) enveloppent les zones d'aboutement respectives (21a, 25a; 31a, 35a) des deux enveloppes (20, 30) aboutées.

6. Procédé d'aboutement selon la revendication 5, **caractérisé en ce que** le joint (10) a, avant expansion, une section droite carrée.

7. Procédé d'aboutement selon la revendication 5, **caractérisé en ce que** le joint (10) a, après expansion, une section droite en I.

8. Procédé d'aboutement selon la revendication 5, **caractérisé en ce que** la zone de fixation (13) consiste en une bande adhésive double face (14).

## Claims

1. Set of enclosures with a leak tightness device, the set of enclosures being designed to contain electrical apparatus and being built up by bringing a first enclosure (20) into contact with a second enclosure (30), the said enclosures each comprise a frame in which sections (21, 25; 31, 35) are fitted, the leak tightness device comprising a flexible seal (10) that has a contact face (11) and an opposite application face (12) in contact with the corresponding contact areas (21a, 25a, 31a, 35a) of the sections making up the two enclosures (20, 30), each formed by a folded edge, **characterised in that** the seal (10) is made of expandable cellular foam, in the precompressed state before its contact face (11) is brought into contact with the contact area (21a, 25a) of the first enclosure, and is capable of expanding and matching the profiled shapes of the contact areas (21a, 25a, 31a, 35a) after its contact face (11) has been applied, and **in that** the contact face (11) of the seal is provided with a glued attachment area (13) near its centre, glued in contact with an edge (21a, 25a) of the first enclosure, the remaining part of the contact face (11) and the application face (12) being applied on each side of the corresponding edges (21a, 25a; 31a, 35a) after the seal has expanded in the assembly position of the two enclosures (20, 30).

2. Set of enclosures according to claim 1, **characterised in that** the seal (10) has a square cross-section before expansion.

3. Set of enclosures according to claim 1, **characterised in that** the seal (10) has a prismatic I-section once it has expanded.

4. Set of enclosures according to claim 1, **characterised in that** the attachment area (13) consists of a double-sided adhesive strip (14).

5. Method for bringing a set of enclosures into contact, the set of enclosures designed to contain electrical apparatus and built up by bringing a first enclosure (20) into contact with a second enclosure (30), the said enclosures each comprise a frame (24, 34) provided with contact areas (21a, 25a; 31a, 35a), the method for bringing a set of enclosures into contact with each other being made using a leak tightness device comprising a flexible seal (10) made of expandable cellular foam, in the precompressed state before application and with a contact face (11) provided with an attachment area (13) near its centre, and an opposite application face (12), **characterised by** the fact that:
- the attachment area (13) of the contact face (11) of the seal (10) is glued in contact with the contact areas (21a, 25a) of the first enclosure (20),
- the contact areas (31a, 35a) of the second enclosure (30) are applied in contact with the application face (12) of the seal (10),
- the enclosures (20, 30) are assembled to each other,
- the seal (10) continues to expand after the enclosures have been attached such that the remaining part of the contact face (11) and the application face (12) surround the contact areas (21a, 25a; 31a, 35a) of the two enclosures (20, 30) brought into contact with each other.

6. Method for bringing a set of enclosures into contact with each other, according to claim 5, **characterised in that** the seal (10) has a square cross-section before expansion.

7. Method for bringing a set of enclosures into contact with each other, according to claim 5, **characterised in that** the seal (10) has a prismatic I-section once it has expanded.

8. Method for bringing a set of enclosures into contact with each other, according to claim 5, **characterised in that** the attachment area (13) consists of a double-sided adhesive strip (14).

## Patentansprüche

1. Gehäusekombination mit Dichtigkeitsvorrichtung, Gehäusekombination für die Aufnahme von Elektrogeräten, gebildet durch Zusammenfügen eines ersten Gehäuses (20) und eines zweiten Gehäuses (30), wobei diese Gehäuse jeweils aus einem Rahmen mit profilierten Elementen (21, 25; 31, 35) bestehen; die Dichtigkeitsvorrichtung wird aus einer flexiblen Dichtung (10) gebildet, die eine Einbauseite (11) und eine gegenüberliegende Applikationsseite (12) besitzt, die jeweils gegen die respektiven Zusammenfügungsstellen (21a, 25a, 31a, 35a) der profilierten Elemente beider Gehäuse (20, 30), die jeweils eine gefaltete Kante bilden, angelegt werden, dahingehend **gekennzeichnet**, dass die Dichtung (10) aus dehnbarem Zellschaum besteht, vor dem Anbringen ihrer Einbauseite (11) an der Zusammenfügungsstelle (12a, 25a) des ersten Gehäuses vorkomprimiert und nach dem Anlegen der Einbauseite (11) zur Dehnung und Anschmiegung an die profilierten Formen der Zusammenfügungsstellen (21a, 25a, 31a, 35a) fähig ist. Ebenso zeigt die Einbauseite (11) in ihrer Mitte eine Befestigungszone (13), die gegen eine Zusammenfügungskante (21a, 25a) des ersten Gehäuses geklebt wird, der verbleibende Teil der Einbauseite (11) und die Applikationsseite (12) werden nach der Dehnung der Dichtung in der Zusammenfügungsposition der beiden Gehäuse (20, 30) beidseitig der respektiven Zusammenfügungskanten (21a, 25a; 31a, 35a) angebracht.

2. Gehäusekombination gemäß Patentanspruch 1, dahingehend **gekennzeichnet**, dass die Dichtung (10) vor der Dehnung einen quadratischen Querschnitt hat.

3. Gehäusekombination gemäß Patentanspruch 1, dahingehend **gekennzeichnet**, dass die Dichtung (10) nach der Dehnung einen geraden i-förmigen Querschnitt hat.

4. Gehäusekombination gemäß Patentanspruch 1, dahingehend **gekennzeichnet**, dass die Befestigungszone (13) aus einem beidseitigen Klebeband besteht (14).

5. Verfahren für das Zusammenfügen einer Gehäusekombination für die Aufnahme von Elektrogeräten und gebildet durch Zusammenfügen eines ersten Gehäuses (20) und eines zweiten Gehäuses (30), wobei diese Gehäuse jeweils aus einem Rahmen (24, 34) mit Zusammenfügungsstellen (21a, 25a; 31a, 35a) bestehen. Das Zusammenfügungsverfahren wird realisiert mit Hilfe einer Dichtigkeitsvorrichtung bestehend aus einer flexiblen Dichtung (10) aus dehnbarem Zellschaum, die vor der Anwendung vorkomprimiert ist, und eine Einbauseite (11), die in ihrer Mitte eine Befestigungszone (13) hat, sowie eine gegenüberliegende Applikationsseite (12) besitzt, dahingehend **gekennzeichnet, dass**:
- die Befestigungszone (13) der Einbauseite (11) der Dichtung (10) gegen die Zusammenfügungsstellen (21a, 25a) des ersten Gehäuses (20) geklebt sind,
- die Zusammenfügungsstellen (31a, 35a) des zweiten Gehäuses (30) gegen die Applikationsseite (12) der Dichtung (10) angelegt sind,
- die Gehäuse (20, 30) untereinander befestigt sind,
- die Dichtung (10) sich nach der Befestigung weiter ausdehnt, so dass der restliche Teil der Einbauseite (11) sowie der Applikationsseite (12) die respektiven Zusammenfügungsstellen (21a, 25a; 31a, 35a) der beiden Gehäuses (20, 30) ganz bedecken.

6. Verfahren für das Zusammenfügen gemäß Patentanspruch 5, dahingehend **gekennzeichnet**, dass die Dichtung (10) vor der Dehnung einen quadratischen Querschnitt hat.

7. Verfahren für das Zusammenfügen gemäß Patentanspruch 5, dahingehend **gekennzeichnet**, dass die Dichtung (10) nach der Dehnung einen i-förmigen Querschnitt hat.

8. Verfahren für das Zusammenfügen gemäß Patentanspruch 5, dahingehend **gekennzeichnet**, dass die Befestigungszone (13) aus einem doppelseitigen Klebeband (14) besteht.
